# EUROPEAN PATENT SPECIFICATION

(11) **EP 2 486 995 B1**
(45) Date of publication and mention of the grant of the patent: **05.08.2020**
(21) Application number: 11153832.8
(22) Date of filing: 09.02.2011
(51) Int. Cl.: B22D 31/00, B29C 65/52, F16L 55/11

(54) **Cast light metal products, such as a heat exchanger, with casting hole plugs, plug and method for manufacturing the same**
Gegossene Leichtmetallprodukte, wie ein Wärmetauscher, mit Gießlochstopfen, Stopfen und Herstellungsverfahren dafür
Produits coulés en alliage léger, par exemple échangeur thermique, avec des obturateurs de trous de moulage, obturateur et son procédé de fabrication

(43) Date of publication of application: 15.08.2012
(73) Proprietor: Dejatech Holding B.V., 5951 DB Belfeld (NL)
(72) Inventor: Gerardus Eliza Henricus Beckers, 5935 BZ Steyl (NL); Henricus Franciscus Wijnand Hubert Faassen, 5935 CB Steyl (NL); Jules Lambert Margriet Faassen, 5935 CB Steyl (NL)
(74) Representative: V.O.

(56) References cited:
- EP-A1- 0 575 295
- EP-A1- 1 878 880
- DE-A1- 2 353 286
- FR-A1- 2 335 786
- GB-A- 2 068 093
- GB-A- 2 207 224
- NL-C2- 1 001 608
- US-A- 3 240 379
- US-A- 6 079 921
- US-B1- 7 338 493

## Description

The invention relates to a cast product such as a heat exchanger, at least partly cast from metal, comprising at least one casting hole closed off by a plug. Heat exchangers are meant by cast products in the sense of the present invention.

In casting products such as heat exchangers lost core techniques are commonly used, in order to allow internal spaces such as water and flue gas channels, burner chambers and the like to be cast integrally. The cores can for example be manufactured from sand, wax or plastic, such as foam. The cores are mounted in a casting box by core extensions. After casting the heat exchanger the core(s) is or are removed from the internal space of the heat exchanger, at least partly through casting holes formed by o rat least resulting from the core extensions. These core holes extend through the wall of the heat exchanger, connecting the internal space(s) with the surrounding to the heat exchanger. These core holes therefore have to be closed off and sealed, in order to for example prevent water or gas to escape from said internal space.

It is known to close off these casting holes by a plug which can be screwed into the casting hole, compressing a seal or using a sealant such as Locktite®. To this end the hole has to be machined to a high finish and has to be provided with internal screw threads, whereas the plug has to be provided with matching external screw threads. Moreover, suitable shoulders have to be provided for the seals and/or sealant. This makes that closing off such casting holes is expensive and labour intensive. Moreover, the machining of the holes increases the risk of damage to the heat exchanger and problems with the sealing, such as leaking past the plug.

GB2068093 discloses a heat exchanger according to the preamble of claim 1.

US3240379 discloses an adhesive bonded hydrotest plug for temporary closure of high pressure piping. FR2335786 discloses a plug for sealing a machined hole in a high pressure hydraulic system. EP1878880 discloses a plug for closing off a cross shaped connection point between at least three (and in the embodiments shown four) components. DE2353286 discloses a valve body, having a flexible skirt made of rubber injected through a central bore in the valve body and out through radial channels, between a widened head portion and an annular flange.

One aim of the present invention can be to provide an alternative for manufacturing cast products such as a heat exchanger. Another aim of the present invention can be to provide an alternative heat exchanger and alternative plugs. A separate aim of the present invention can be to provide a product such as a heat exchanger or method for forming such which is less expensive and/or less prone to problems with for example leaking of the heat exchanger and/or easy to repair.

One or more of these and other aims can be achieved by a product such as a heat exchanger, plug and/or method according to the present invention.

In a first aspect the present invention can be characterised by the features of claim 1.

A plug for closing off a casting hole in a product such as a heat exchanger, comprising an internal passage for glue or bonding agent is disclosed in the present patent.

In a further aspect the present invention can be characterised by a method for manufacturing a heat exchanger, characterized by the feature of claim 8.

These aspects can be achieved separately or in combination according to the invention. For a better understanding embodiments of a product, especially a heat exchanger, plug and method according to the invention shall be elucidated hereafter, referring to the drawings, wherein:
Fig. 1 schematically shows a plug in side view;
Fig. 2 schematically shows a plug of fig 1 in cross section along the line II - II in fig. 1;
Fig. 3 schematically shows part of a heat exchanger, in cross section, with a plug according to the invention;
Fig. 4 schematically shows a number of core elements or cores in a mould for forming a heat exchanger;
Fig. 5 schematically shows a heat exchanger in cross section, formed in a mould according to fig. 4, showing a number of casting holes to be closed by a plug, for example according to fig 1, 2 and 3: and
Fig. 6 schematically an set of a plug and injector and in cross section a plug in an opening, fixated with a glue and/or bonding agent.

In this description a plug can be or be referred to as a stop too.

The embodiments shown and discussed here are only shown and discussed by way of example and should by no means be understood as limiting the scope of the invention in any way. In the embodiments shown and discussed the same or corresponding elements have the same or corresponding reference signs. Various combinations of elements as shown and different elements should be understood as falling within the scope of the invention as defined in this application and the included claims. In this document casting hole should be understood as at least including core openings. Aspects and advantages discussed with respect to the heat exchanger should be considered as also applicable to other products according to the invention.

In this application a heat exchanger has to be understood as meaning or at least including an exchanger for exchanging heat between any two or more fluids, such as but not limited to gas/gas, gas/liquid, liquid/liquid or combinations thereof. Heat exchanger has to be understood as including at least also heat exchanger body or element to be fitted in or for forming a heat exchanger. A heat exchanger can have any number of gas- and/or liquid channels, ducts, spaces or otherwise provided surfaces for heat exchanging between fluids, such as gasses and/or liquids. A heat exchanger according to the present invention can be cast, such as but not limited to mould formed, wherein one or more cores can be used for forming at least one or more internal spaces, such as channels, ducts and the like, which can include any shape and size and can be provided with functional elements, such as but not limited to heat exchanging surface enlarging elements, for example ribs, fingers, notches, ribs or similar elements, for example as known from existing heat exchangers. Cores can be lost cores, such as but not limited to cores made of sand, wax, plastic, foam or similar materials known from the prior art. A heat exchanger according to the present invention can for example be cast or moulded from metal, such as but not limited to light metal or light metal alloys, such as for example aluminium or magnesium, and/or plastic. Light metal is well known in the art.

Commonly in casting heat exchangers a core is mounted in a mould or casting box or other casting provision, by using core extensions which are supported in the casting provision, such as in the mould or box. These core extensions extend, directly after casting, through casting or core openings or holes formed in the heat exchanger. Alternatively the core extensions can be mounted in the casting provision, such as in the mould or box, supporting the core or core elements within it. In the former embodiments the core extensions can be removed from the heat exchanger together with the further core or core elements through the casting hole or holes, especially by breaking down the core and core extensions. In the latter case the core extensions can be removed when removing the casting provision, after which the core or core elements can be removed from the heat exchanger through the or a casting hole formed by said core extension.

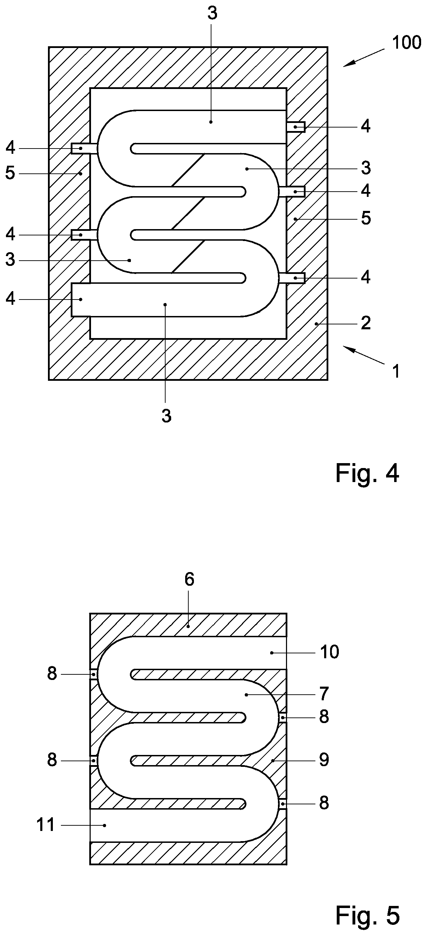

In fig. 4 a casting provision 100 is shown, in cross section, showing a mould 1 with a wall 2 and a series of core elements of cores 3 supported by core extensions 4 mounted in wall parts 5 of the wall 2. These core elements are for example provided for forming a water channel. Similarly core elements 3 can be provided for forming further channels or spaces, such as but not limited to a gas channel, such as a flue channel, burner space, heat exchanging spaces, heat exchanging surface increasing elements and the like. The core elements or cores 3 are preferably lost core elements such as sand or foam elements. There can also be one integral core 3 in stead of core elements assembled into such core. A heat exchanger can be cast in said provision 100 by introducing suitable material into the spaces left in the provision by the cores 3, which material is then allowed to set and form the heat exchanger or at least a suitable part thereof, for example a heat exchanger body or element.

In fig. 5 an exemplary embodiment of a heat exchanger 6 is shown by way of example, schematically in cross section across a water channel 7 formed by the core elements 3. This heat exchanger can have been made in a provision of fig. 4. As can be seen casting holes or openings 8 are formed in the wall 9 of the heat exchanger 6, which connect the channel 7 with the surrounding environment of the heat exchanger 6. These casting holes or openings 8 are to be closed off to allow a fluid such as gas or a liquid, for example hot flue gasses or water to flow through the channel 7 in the proper way, for example from an inlet 10 to an outlet 11. Therefore these openings or holes 8 have to be closed of water and/or gas tight.

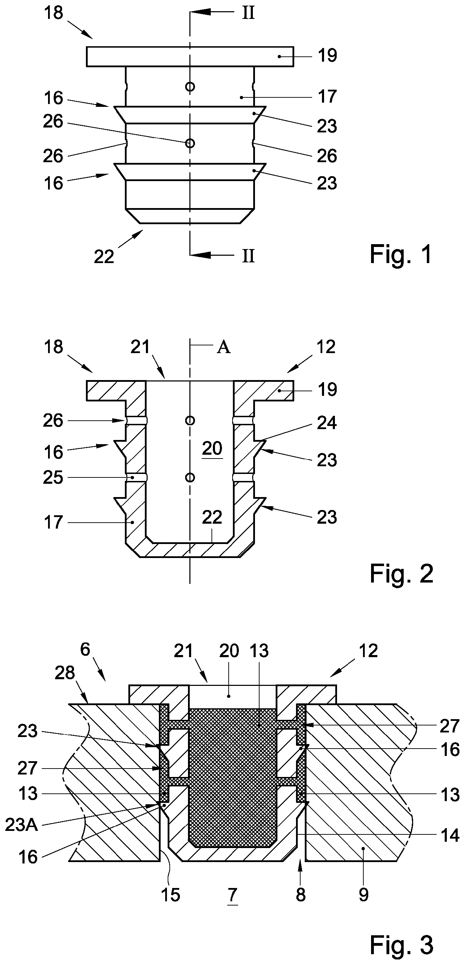

Fig. 3 shows, schematically and in cross section, part of the wall 9 of a heat exchanger 6, for example according to fig. 5, with a plug 12 mounted in an opening or hole 8. The plug 12 can be according to fig. 1 and 2, as will be discussed hereafter. The plug 12 can be glued or bonded into the hole or opening 8, glue or bonding agent 13 provided between at least part of an external peripheral surface 14 of the plug 12 and an inner surface 15 of the hole or opening 8, preferably adhering to both surfaces 14, 15. The glue or bonding agent 13 can form at least part of a seal between the plug 12 and the heat exchanger 6. A glue or bonding agent can for example be chosen from the group comprising air setting sealants or kit, such as but not limited to a glue such as but not limited to Dow Corning 7019, whereas other types of glue or bonding agent could also be used. A tow component variant of the said Dow Corning 7019 can be used, having the benefit of lower viscosity when injecting. The glue and-or bonding agent can be transparent, at least when set, minimizing visibility after application thereof. A person skilled in the art can easily make a choice depending on e.g. types of material used for product and plug, intended use of the product and other considerations.

In a heat exchanger 6 according to the present invention the holes or openings 8 do not have to be machined or otherwise finished before fitting a plug, due to the glue or bonding agent 13 used and/or peripheral elements 16 on the peripheral surface 14 of the plug, which preferably is or can be deformed aiding to sealing the opening or hole 8. By not having to machine the holes, such as but not limited to cutting screw thread, smoothing the surface, drilling, honing or the like, the cost for manufacturing the product is reduced. Moreover it is prevented that metal chips, particles or other metal parts are entered into the product such as the heat exchanger or other cast product comprising channels, hollow spaces or the like, meaning that cleaning of the product internally is not necessary, further reducing the cost of manufacturing of and preventing damage to the product. If necessary for e.g. maintenance or repair, a plug 12 can relatively easily be removed, breaking the glue or bonding, where after a new plug 12 can easily be fitted.

Fig. 1 and 2 show a plug 12 according to the invention. The plug can be made of any suitable material. In an embodiment the plug 12 is made of plastic, such as a heat resistant plastic. For example a plastic can be used at least resistant to temperatures higher than will be reached within a channel 7. The plastic can be filled, for example glass filled. By way of example only, not limiting the invention in any way, the material for the plug 12 can be polycarbonate (PC) The plug 12 can have any suitable shape and dimensions, compatible with an opening 8 in which it has to be used. The plug 12 can be made by any suitable means, for example but not limited to casting, injection moulding and/or machining. By way of example a plug 12 will be shown and discussed for closing off a cylindrical opening 8. The plug 12 has a body 17 which is substantially cylindrical, comprising at one end 18 a peripheral flange 19 extending outward. An internal opening or channel 20 is provided through the body 17, for example substantially parallel to a longitudinal axis A thereof, from an open end 21 at the end 18 of the body near the flange 19 to a closed of end 22.

The body has the peripheral surface 14, provided with compressible elements 16, such as but not limited to peripheral ridges 23. One or more of such elements can be provided, at least in longitudinal direction, i.e. parallel to the axis A, spaced apart from the flange 19 and, where applicable, each other. In the embodiment shown the ridges 23 have a substantially triangular cross section, for example with a surface 24 substantially parallel to the flange 19. In fig. 1-3 two such ridges 23 are shown. However there can be any suitable number of such ridges, whereas the ridge or ridges 23 can also be made differently, for example spiralling around part of the peripheral surface 14. Number of channels or openings 25 is provided extending from the internal opening or channel 20 through the peripheral surface 14. The or each channel 25 has an opening 26 between the flange 19 and an adjacent ridge 23 or such element or between two such ridges 23 or such elements. Preferable at least one ridge 23A or such elements is provided near the closed end 22 of the plug 12, the or each channel 25 having the opening 26 between said flange 19 and the ridge 23A.

As can be seen from fig. 3, the plug 12 can be placed inside the opening 8, wherein preferably at least part of the ridge or ridges 23 is or are compressed against the surface 15 of the opening 8. The ridges therefore close off one or more spaces 27 between the peripheral surface 14 of the plug 12 and the surface 15 of the opening 8. The plug 12 preferably is inserted into the opening 8 far enough for the flange 19 to abut the outer surface 28 of the heat exchanger 6 around the opening 8. Glue and/or bonding agent 13 has been forced into the opening 20 and out through the or each channel 25 into the spaces 27. Preferably a glue and/or bonding agent 13 can be used preferably bonding to at least one of the plug 12 and the product 6, such as the heat exchanger 6. Preferably it will adhere or bond to both. The glue and/or bonding agent 13 in the space or spaces 27 forms at least part of a sealing of the plug 12 in the opening 8, making it gas and/or fluid tight. If present the ridge 23A will prevent the glue or bonding agent 13 to flow into the channel 7.

For introducing the glue or bonding agent 13 into and through the openings 25 and into the spaces 27 a pumping device can be used to pressurise the glue or bonding agent. In an embodiment an expanding glue or bonding agent 13 can be used, for easier filling the spaces 27. In another or the same embodiment the glue or bonding agent can be multiple component glue or agent, such as two component glue or agent. The glue or bonding agent can be relatively fluid, making it easier to force it into the spaces 27. The central channel 20 can be partly or wholly filled with the glue and/or bonding agent 13 too, supporting the wall of the body 17 of the plug 12 and moreover providing insulation too.

Alternatively the glue or bonding agent can be forced directly into the spaces 27 between the plug 12 and the surface 15 of the opening 8, whereby the central passage 20 and channels 25 may not be necessary. To this end an opening should be provided in or along the flange 19.

Since the openings 8 are cast openings, they can have virtually any shape or form desired, such as but not limited to round, oblong, square, multiple angled or otherwise cross sectioned, the plug being made accordingly. The opening 8 can have an internal shoulder near the channel 7, preventing the plug 12 from being inserted further, in which case the flange 19 could be omitted, if desired. In an embodiment the glue and/or bonding agent 13 can be allowed to come up along the plug 12 to the surface 28, for sealing and adhering purposes.

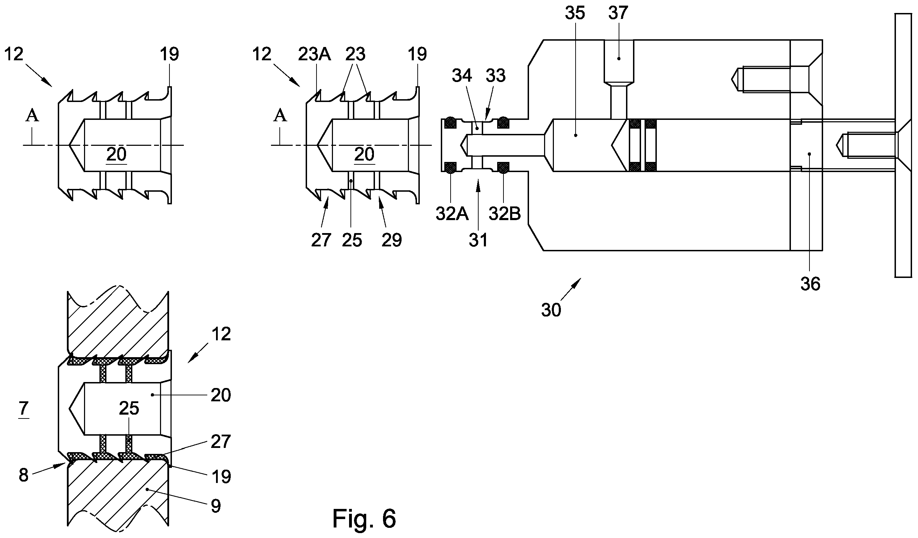

In fig. 6 a plug 12 is shown in an opening 8, before and after injecting a glue and/or bonding agent 13. In this embodiment the opening is cylindrical and the plug has an end ridge 23A which extends into the channel 7, against the inside of the wall 9 of the exchanger 6, for added support, at least prior to and during injection of the glue and/or bonding agent 13. The glue and/or bonding agent 13 is injected into each of the spaces 27 through two sets of channels 25. The agent 13 is pressurised such that it will pass between the ridges 23 adjacent channels openings 26 and the surface 15 of the opening 8.

As can be seen from fig. 6 an injector 30 can be used having a nose 31 that can be fitted inside the opening 20 of the plug 12. The nose comprises two annular sealing rings 32, between which an annular injection channel 33 is provided. At least one channel 34 extends into said annular injection channel 33 from an internal chamber 35, bounded at one side by a plunger 36. A feeder channel 37 is provided for bringing the glue and/or bonding agent or the components thereof into said chamber 35. When a plug 12 is to be fitted into an opening 8, the nose 31 is inserted into the opening 20 far enough for the most forward sealing ring 32A to pass the channels 25, whereas the rearward sealing ring 32B stays short of the channels 25. Between the nose 32 and the surface 15 of the opening glue and/or bonding agent 13 is injected from the chamber 35 by pressing the plunger 36 forward, towards the plug 12. The glue and/or bonding agent 13 is pressurised such that it does not pass the outer most ridges 23, 23A. When the right amount of glue and/or bonding agent 13 has been injected, which may be visible from the outside by glue and/or bonding agent appearing at the ridge or flange closest to the injector, the injection can be plugged and the nose 31 can be withdrawn from the plug 12. The sealing rings 32 will remove all excess glue and/or bonding agent from the channel 20, reducing the amount of material used to a minimum. The glue and/or bonding agent is then allowed to set, if necessary. The injector can be reused for other plugs. An injector 30 preferably has a portion for injecting a glue and/or bonding agent substantially radially outward inside a plug 12.

The invention is by no means limited to the embodiments shown and/or discussed. Many variants are possible within the present invention. For example heat exchangers can be cast and provided with one or more plugs, whereas the plugs can have different shapes and dimensions. A plug can have one or more ridges or such elements, whereas the channels 25 can be provided in different positions. For example only one or one set of channels can be provided exiting between two adjacent ridges, or various such sets can exit between adjacent ridges. The inner surface of the opening can be substantially continuous or can be provided with appropriate profiling, such as threads, ridges, grooves, steps, shoulders or the like. A glue and/bonding agent can be any agent suitable for injection into the spaces 27 and for at least sealing and/or fixating the plug in the opening 12.

## Claims

1. Heat exchanger (6), at least partly cast from metal, comprising at least one casting hole (8), closed off by a plug (12), wherein the plug (12) is glued or bonded into the casting hole (8), by glue or bonding agent (13), **characterised in that** the plug (12) has an end (18) and comprises at least one peripheral ridge (23), wherein the glue or bonding agent (13) extends between the plug (12) and the exchanger (6), at least between the ridge (23) and the end (18) and/or between two ridges (23), the agent (13) providing or aiding at least part of a seal sealing off the casting hole (8).

2. Heat exchanger (6) according to claim 1, wherein the casting hole (8) has a cast, unfinished surface to which said plug (12) is glued or bonded.

3. Heat exchanger according to claim 1 or 2, wherein the at least one ridge (23) forms a compressible element (16) on a peripheral surface of the plug (12).

4. Heat exchanger according to any one of the preceding claims, wherein the plug (12) is provided with an internal opening (20), wherein at least one channel (25) extends from the internal opening (20) to an outer surface of the plug (12).

5. Heat exchanger according to any one of the preceding claims, wherein the glue or bonding agent (13) has been injected into the casting hole (8) through the plug (12).

6. Heat exchanger according to any one of the preceding claims, wherein the plug (12) has been made of metal, preferably light metal, or plastic.

7. Heat exchanger according to any one of the preceding claims, wherein the plug (12) has been made by moulding from plastic material.

8. Method for manufacturing a heat exchanger (6), wherein at least one core (3) is made and a heat exchanger (6) is moulded from metal using said at least one core (3), at least one casting hole (8) provided through which at least part of the core (3) is removed from the heat exchanger (6) after casting, wherein a plug (12) is mounted in said at least one casting hole (8) using glue and/or bonding agent (13), **characterised in that** a plug (12) is used which has an end (18) and comprises at least one peripheral ridge (23), wherein the glue or bonding agent (13) extends between the plug (12) and the exchanger (6), at least between the ridge (23) and the end (18) and/or between two ridges (23),between part of a peripheral surface of the plug (12) and the heat exchanger (6), and forms at least part of a seal.

9. Method according to claim 8, wherein the plug (12) is mounted in the casting hole (8) substantially without machining the casting hole (8).

10. Method according to claim 8 or 9, wherein the glue and/or bonding agent (13) is pressure injected into a space between the plug (12) and the cast heat exchanger (6).

11. Method according to claim 10, wherein the glue and/or bonding agent is pressure injected into a space between the plug and the cast heat exchanger through the plug (12).

12. Method according to any one of claims 8 - 11, wherein the plug (12) is moulded, especially injection moulded, preferably moulded or injection moulded from plastic.

13. Method according to any one of claims 8 - 12, wherein the glue and/or bonding agent (13) is injected into said space, such that it forms at least part of a seal sealing off the casting hole (8), preferably such that the seal can visually be inspected from outside the heat exchanger (6).

## Patentansprüche

1. Wärmetauscher (6), wenigstens teilweise aus Metall geformt, umfassend wenigstens ein Gussloch (8), das durch einen Stopfen (12) verschlossen ist, wobei der Stopfen (12) in das Gussloch (8) durch Klebstoff oder Bindemittel (13) verklebt oder verbunden ist, **dadurch gekennzeichnet, dass** der Stopfen (12) ein Ende (18) aufweist und wenigstens eine Umfangsrippe (23) umfasst, wobei sich der Klebstoff oder das Bindemittel (13) zwischen dem Stopfen (12) und dem Wärmetauscher (6) erstreckt, wenigstens zwischen der Rippe (23) und dem Ende (18) und/oder zwischen zwei Rippen (23), wobei das Mittel (13) wenigstens einen Teil einer Dichtung bereitstellt oder ergänzt, die das Gussloch (8) abdichtet.

2. Wärmetauscher (6) nach Anspruch 1, wobei das Gussloch (8) eine gegossene, unfertige Oberfläche aufweist, mit der der Stopfen (12) verklebt oder verbunden ist.

3. Wärmetauscher nach Anspruch 1 oder 2, wobei die wenigstens eine Rippe (23) ein komprimierbares Element (16) auf einer Umfangsfläche des Stopfens (12) bildet.

4. Wärmetauscher nach einem der vorhergehenden Ansprüche, wobei der Stopfen (12) mit einer inneren Öffnung (20) versehen ist, wobei sich wenigstens ein Kanal (25) von der inneren Öffnung (20) zu einer Außenfläche des Stopfens (12) erstreckt.

5. Wärmetauscher nach einem der vorhergehenden Ansprüche, wobei der Klebstoff oder Bindemittel (13) durch den Stopfen (12) in das Gussloch (8) eingespritzt wurde.

6. Wärmetauscher nach einem der vorhergehenden Ansprüche, wobei der Stopfen (12) aus Metall, vorzugsweise Leichtmetall oder Kunststoff hergestellt wurde.

7. Wärmetauscher nach einem der vorhergehenden Ansprüche, wobei der Stopfen (12) durch Formen von Kunststoffmaterial hergestellt wurde.

8. Verfahren zur Herstellung eines Wärmetauschers (6), wobei wenigstens ein Kern (3) hergestellt wird und ein Wärmetauscher (6) unter Verwendung des wenigstens einen Kerns (3) aus Metall geformt ist, wobei wenigstens ein Gussloch (8) vorgesehen ist, durch das wenigstens ein Teil des Kerns (3) nach dem Gießen aus dem Wärmetauscher (6) entfernt wird, wobei ein Stopfen (12) unter Verwendung von Klebstoff und/oder Bindemittel (13) in dem wenigstens einen Gussloch (8) montiert ist, **dadurch gekennzeichnet, dass** ein Stopfen (12) verwendet wird, der ein Ende (18) aufweist und wenigstens eine Umfangsrippe (23) umfasst, wobei sich der Klebstoff oder Bindemittel (13) zwischen dem Stopfen (12) und dem Wärmetauscher (6), wenigstens zwischen der Rippe (23) und dem Ende (18) und/oder zwischen zwei Rippen (23), zwischen einem Teil einer Umfangsfläche des Stopfens (12) und dem Wärmetauscher (6) erstreckt und wenigstens einen Teil der Dichtung bildet.

9. Verfahren nach Anspruch 8, wobei der Stopfen (12) im Wesentlichen ohne Bearbeitung des Gusslochs (8) in dem Gussloch (8) montiert ist.

10. Verfahren nach Anspruch 8 oder 9, wobei der Klebstoff und/oder das Bindemittel (13) durch Druck in einen Raum zwischen dem Stopfen (12) und dem gegossenen Wärmetauscher (6) eingespritzt wird.

11. Verfahren nach Anspruch 10, wobei der Klebstoff und/oder das Bindemittel durch den Stopfen (12) durch Druck in einen Raum zwischen dem Stopfen und dem gegossenen Wärmetauscher eingespritzt wird.

12. Verfahren nach einem der Ansprüche 8 bis 11, wobei der Stopfen (12) geformt, insbesondere spritzgegossen, vorzugsweise geformt oder aus Kunststoff spritzgegossen wird.

13. Verfahren nach einem der Ansprüche 8 bis 12, wobei der Klebstoff und/oder das Bindemittel (13) in den Raum eingespritzt werden, so dass er/es wenigstens einen Teil einer Dichtung bildet, die das Gussloch (8) abdichtet, vorzugsweise so, dass die Dichtung von außerhalb des Wärmetauschers (6) visuell überprüft werden kann.

## Revendications

1. Échangeur de chaleur (6), au moins partiellement coulé en métal, comprenant au moins un trou de coulée (8), obturé par un obturateur (12), dans lequel l'obturateur (12) est collé ou fixé dans le trou de coulée (8), par de la colle ou un agent de fixation (13), **caractérisé en ce que** l'obturateur (12) a une extrémité (18) et comprend au moins une nervure périphérique (23), dans lequel la colle ou l'agent de fixation (13) s'étend entre l'obturateur (12) et l'échangeur (6), au moins entre la nervure (23) et l'extrémité (18) et / ou entre deux arêtes (23), l'agent (13) fournissant ou formant au moins une partie d'un joint d'étanchéité scellant le trou de coulée (8).

2. Échangeur de chaleur (6) selon la revendication 1, dans lequel le trou de coulée (8) a une surface coulée non finie à laquelle ledit obturateur (12) est collé ou fixé.

3. Échangeur de chaleur selon la revendication 1 ou 2, dans lequel la au moins une nervure (23) forme un élément compressible (16) sur une surface périphérique de l'obturateur (12).

4. Échangeur de chaleur selon l'une quelconque des revendications précédentes, dans lequel l'obturateur (12) est pourvu d'une ouverture interne (20), dans lequel au moins un canal (25) s'étend depuis l'ouverture interne (20) vers une surface externe de l'obturateur (12).

5. Échangeur de chaleur selon l'une quelconque des revendications précédentes, dans lequel la colle ou l'agent de fixation (13) a été injecté(e) dans le trou de coulée (8) à travers l'obturateur (12).

6. Échangeur de chaleur selon l'une quelconque des revendications précédentes, dans lequel l'obturateur (12) a été réalisé en métal, de préférence en métal léger, ou en plastique.

7. Échangeur de chaleur selon l'une quelconque des revendications précédentes, dans lequel l'obturateur (12) a été réalisé par moulage de matière plastique.

8. Procédé de fabrication d'un échangeur de chaleur (6), dans lequel au moins un noyau (3) est fabriqué et un échangeur de chaleur (6) est moulé à partir de métal en utilisant ledit au moins un noyau (3), au moins un trou de coulée (8) étant prévu à travers lequel au moins une partie du noyau (3) est retirée de l'échangeur de chaleur (6) après la coulée, dans lequel un obturateur (12) est monté dans ledit au moins un trou de coulée (8) en utilisant de la colle et/ou un agent de fixation (13), **caractérisé en ce qu'**un obturateur (12) est utilisé, qui a une extrémité (18) et qui comprend au moins une nervure périphérique (23), dans lequel la colle ou l'agent de fixation (13) s'étend entre l'obturateur (12) et l'échangeur (6), au moins entre la nervure (23) et l'extrémité (18) et/ou entre deux nervures (23), entre une partie d'une surface périphérique de l'obturateur (12) et l'échangeur de chaleur (6), et forme au moins une partie d'un joint d'étanchéité.

9. Procédé selon la revendication 8, dans lequel l'obturateur (12) est monté dans le trou de coulée (8) sensiblement sans usinage du trou de coulée (8).

10. Procédé selon la revendication 8 ou 9, dans lequel la colle et/ou l'agent de fixation (13) est injecté sous pression dans un espace entre l'obturateur (12) et l'échangeur de chaleur coulé (6).

11. Procédé selon la revendication 10, dans lequel la colle et/ou l'agent de fixation (13) est injecté sous pression dans un espace entre l'obturateur et l'échangeur de chaleur coulé à travers l'obturateur (12).

12. Procédé selon l'une quelconque des revendications 8 à 11, dans lequel l'obturateur (12) est moulé, en particulier moulé par injection, de préférence moulé ou moulé par injection à partir de matière plastique.

13. Procédé selon l'une quelconque des revendications 8 à 12, dans lequel la colle et/ou l'agent de liaison (13) est injecté dans ledit espace, de sorte qu'il forme au moins une partie d'un joint d'étanchéité scellant le trou de coulée (8), de préférence de telle sorte que le joint d'étanchéité peut être inspecté visuellement depuis l'extérieur de l'échangeur de chaleur (6).
